(19) Europäisches Patentamt
European Patent Office
Office européen des brevets

(11) **EP 3 522 189 B1**

(12) **EUROPÄISCHE PATENTSCHRIFT**

(45) Veröffentlichungstag und Bekanntmachung des Hinweises auf die Patenterteilung:
**22.11.2023   Patentblatt 2023/47**

(51) Internationale Patentklassifikation (IPC):
*H01G 9/028* (2006.01)       *H01G 9/00* (2006.01)
*H01G 11/48* (2013.01)       *H01G 11/56* (2013.01)

(21) Anmeldenummer: **19163237.1**

(52) Gemeinsame Patentklassifikation (CPC):
**H01G 9/0036; H01G 9/028; H01G 11/48; H01G 11/56**

(22) Anmeldetag: **22.04.2009**

(54) **DISPERSION VON POLYTHIOPHENTEILCHEN**

DISPERSION OF POLYTHIOPHENE PARTICLES

DISPERSION DE PARTICULES DE POLYTHIOPHÈNE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **23.05.2008   DE 102008024805**

(43) Veröffentlichungstag der Anmeldung:
**07.08.2019   Patentblatt 2019/32**

(62) Dokumentnummer(n) der früheren Anmeldung(en) nach Art. 76 EPÜ:
**09749699.6 / 2 283 497**

(73) Patentinhaber: **Heraeus Deutschland GmbH & Co. KG**
**63450 Hanau (DE)**

(72) Erfinder:
• **Merker, Udo**
  **51105 Köln (DE)**
• **Lövenich, Wilfried**
  **51469 Bergisch Gladbach (DE)**

(74) Vertreter: **Herzog IP Patentanwalts GmbH**
**Steinstraße 16-18**
**40212 Düsseldorf (DE)**

(56) Entgegenhaltungen:
**EP-A- 1 746 613          WO-A1-2007/052852**
**DE-A1-102004 003 784     DE-A1-102005 010 162**
**JP-A- 2007 297 637**

**EP 3 522 189 B1**

**Beschreibung**

Die Erfindung betrifft ein eine Dispersion A) enthaltend wenigstens Teilchen B) enthaltend ein elektrisch leitfähiges Polythiophen, das gegebenenfalls substituiert ist, und ein Dispersionsmittel D) Ein handelsüblicher Feststoffelektrolytkondensator besteht in der Regel aus einer porösen Metallelektrode, einer auf der Metalloberfläche befindlichen Oxidschicht, einem elektrisch leitfähigen Feststoff, der in die poröse Struktur eingebracht wird, einer äußeren Elektrode (Kontaktierung), wie z.B. einer Silberschicht oder einer Metallfolie mit einem Separator, sowie weiteren elektrischen Kontakten und einer Verkapselung.

Beispiele für Feststoffelektrolytkondensatoren sind Tantal-, Aluminium, Niob- und Nioboxidkondensatoren mit Ladungstransferkomplexen, Braunstein- oder Polymer-Feststoffelektrolyten. Die Verwendung poröser Körper hat den Vorteil, dass sich aufgrund der großen Oberfläche eine sehr hohe Kapazitätsdichte, d.h. eine hohe elektrische Kapazität auf kleinem Raum, erzielen lässt.

Besonders geeignet als Feststoffelektrolyte sind aufgrund ihrer hohen elektrischen Leitfähigkeit π-konjugierte Polymere. π-konjugierte Polymere werden auch als leitfähige Polymere oder als synthetische Metalle bezeichnet. Sie gewinnen zunehmend an wirtschaftlicher Bedeutung, da Polymere gegenüber Metallen Vorteile bezüglich der Verarbeitbarkeit, des Gewichts und der gezielten Einstellung von Eigenschaften durch chemische Modifikation haben. Beispiele für bekannte π-konjugierte Polymere sind Polypyrrole, Polythiophene, Polyaniline, Polyacetylene, Polyphenylene und Poly(p-phenylen-vinylene), wobei ein besonders wichtiges und technisch genutztes Polythiophen das Poly-3,4-(ethylen-1,2-dioxy)thiophen, oft auch als Poly(3,4-ethylendioxythiophen) bezeichnet, ist, da es in seiner oxidierten Form eine sehr hohe Leitfähigkeit aufweist.

Die technische Entwicklung in der Elektronik erfordert zunehmend Feststoffelektrolytkondensatoren mit sehr niedrigen Äquivalenten Serienwiderständen (ESR). Grund dafür sind beispielsweise fallende Logikspannungen, eine höhere Integrationsdichte und steigende Taktfrequenzen in integrierten Schaltkreisen. Ferner senkt ein niedriger ESR auch den Energieverbrauch, was besonders für mobile, batteriebetriebene Anwendungen vorteilhaft ist. Es besteht daher der Wunsch, den ESR von Feststoffelektrolytkondensatoren möglichst weit zu reduzieren.

In der europäischen Patentschrift EP-A- 340 512 wird die Herstellung eines Feststoffelektrolyten aus 3,4-Ethylen-1,2-dioxythiophen und die Verwendung seines durch oxidative Polymerisation hergestellten, kationischen Polymeren als Feststoffelektrolyt in Elektrolytkondensatoren beschrieben. Poly(3,4-ethylendioxythiophen) als Ersatz von Mangandioxid oder von Ladungstransferkomplexen in Feststoffelektrolytkondensatoren senkt aufgrund der höheren elektrischen Leitfähigkeit den äquivalenten Serienwiderstand des Kondensators und verbessert das Frequenzverhalten.

Nachteilig an diesem und ähnlichen Verfahren ist, dass das leitfähige Polymer durch Polymerisation in-situ im Elektrolytkondensator erzeugt wird. Dazu müssen das Monomer, wie z.B. 3,4-Ethylen-1,2-dioxythiophen, und Oxidationsmittel in Gegenwart von Lösungsmitteln zusammen oder nacheinander in den porösen Metallkörper eingebracht und anschließend polymerisiert werden. Eine solche chemische Reaktion ist bei der Herstellung elektronischer Bauteile aber unerwünscht, da es sehr schwierig ist, die chemische Reaktion in Millionen von kleinen porösen Bauteilen immer identisch ablaufen zu lassen, um Kondensatoren gleicher Spezifikation herzustellen.

Weiterhin nachteilig an in-situ Polymerisationen bei der Herstellung von Feststoffelektrolyten für Kondensatoren ist, dass die Oxidationsmittel das Dielektrikum (Oxidschicht) auf der Metallelektrode schädigen können. Als Oxidationsmittel werden in der Regel Übergangsmetallsalze, wie z.B. Fe(III)-Salze, verwendet. Als Reaktionsprodukte der Polymerisation verbleiben nach der Polymerisation dann nicht nur das elektrisch leitfähige Polymer sondern auch die reduzierten Metallsalze, wie z.B. Fe(II)-Salze im Elektrodenkörper zurück. Durch anschließende Waschschritte kann zwar versucht werden, diese Salze zu entfernen. Dies ist jedoch aufwendig und gelingt nicht vollständig, d.h. es verbleiben immer Reste der Metallsalze im Elektrodenkörper zurück. Bekanntlich können insbesondere Übergangsmetalle das Dielektrikum schädigen, so dass die hieraus resultierenden erhöhten Restströme die Lebensdauer der Kondensatoren deutlich reduzieren oder gar einen Einsatz der Kondensatoren unter harschen Bedingungen, wie hohen Temperaturen und/oder hoher Luftfeuchte, unmöglich machen.

Darüber hinaus ist der Herstellungsprozess von Feststoffelektrolytkondensatoren bei Anwendung einer in-situ Polymerisation sehr aufwendig: Ein Polymerisationsprozess (Tränkung, Polymerisation, Waschung) dauert in der Regel mehrere Stunden, unter Umständen müssen hierbei explosionsgefährliche oder toxische Lösungsmittel eingesetzt werden und es bedarf sehr vieler Polymerisationsprozesse, um einen Feststoffelektrolyten herzustellen.

Eine Polymerisation von Monomeren kann auch in Abwesenheit von Oxidationsmitteln elektrochemisch erfolgen. Die elektrochemische Polymerisation erfordert jedoch, dass zunächst ein leitfähiger Film auf der isolierenden Oxidschicht der Metallelektrode abgeschieden wird. Dazu bedarf es dann wiederum einer in-situ Polymerisation mit allen oben aufgeführten Nachteilen. Schließlich muss diese Schicht dann für jede einzelne Metallelektrode elektrisch kontaktiert werden. Diese Kontaktierung ist in der Massenfertigung sehr aufwendig und kann die Oxidschicht beschädigen. Darüber hinaus ist die elektrochemische Abscheidung in den Poren der porösen Metallelektrode sehr schwierig, da die Abscheidung aufgrund des elektrischen Potentialverlaufs primär an den Außenseite des Elektrodenkörpers stattfindet.

DE 10 2005 010 162 A1 offenbart ein leitfähiges Polymer, wobei aus dem Polymer gebildete nanoskopische Teilchen mit einer Teilchengröße von weniger als 100 nm eine anisotrope Morphologie aufweisen, die nicht kugelförmig ist und ein Länge-zu-Durchmesser-Verhältnis ("l/D") von größer als 1,2 aufweist.

DE 10 2004 003 784 A1 offenbart eine Dispersion, die Teilchen mindestens eines intrinsisch leitfähigen Polymers enthält, wobei die Teilchengröße im Mittel (Gewicht) weniger als 1 μm beträgt, wobei das Dispersionsmittel bei Raumtemperatur eine Flüssigkeit ist und wobei eine aus dieser Dispersion gebildete Schicht, Folie oder Platte nach Entfernen des Dispersionsmittels eine Leitfähigkeit von > 100 S/cm aufweist.

WO 2007/052852 A1 offenbart Verfahren zur Herstellung einer Dispersion eines intrinsisch leitfähigen Polymers in einem organischen Lösungsmittel, umfassend einen Entionisierungsschritt zum Entionisieren einer wässrigen kolloidalen Dispersion eines intrinsisch leitfähigen Polymers durch Hindurchleiten von Flüssigkeit, wodurch das intrinsisch leitfähige Polymer von daran haftenden Kationen befreit wird, einen Lösungsmittelsubstitutionsschritt zum Ersetzen von Wasser in der wässrigen kolloidalen Dispersion nach dem Entionisierungsschritt durch ein anderes organisches Lösungsmittel als N-Methylpyrrolidon und Dimethylsulfoxid, und einen Additivbehandlungsschritt der Zugabe von N-Methylpyrrolidon oder Dimethylsulfoxid zu der durch den Lösungsmittelsubstitutionsschritt erhaltenen Dispersion.

JP 2007 297637 A offenbart eine Dispersion eines leitfähigen Polymers in einem organischen Lösungsmittel, wobei das organische Lösungsmittel mindestens eines, ausgewählt aus Methanol, Ethanol, 1-Propanol, 2-Propanol und Ketonen, enthält und einen Feuchtigkeitsgehalt von 1 % oder weniger aufweist.

EP 1 746 613 A1 offenbart ein Verfahren zur Herstellung eines Elektrolytkondensators, bei dem auf einen Kondensatorkörper eine Dispersion aufgebracht wird, die wenigstens Teilchen eines elektrisch leitfähigen Polymers, einen Binder und ein Dispersionsmittel enthält, wobei die Dispersion zusätzlich Feststoffpartikel mit einem Durchmesser im Bereich von 0,7 bis 20 μm enthält.

In der PCT Anmeldung WO-A1-2007/031206 wird der Feststoffelektrolyt eines Elektrolytkondensators mittels einer Dispersion enthaltend Teilchen aus Poly(3,4-ethylendioxythiophen)/Polystyrolsulfonat mit einem mittleren Durchmesser von 1-100 nm hergestellt. Obwohl dieses Verfahren die oben beschriebenen Nachteile der in-situ Polymerisation überwindet, erweist sich das Verfahren als zu aufwendig. So muss die Dispersion in WO A1 2007/031206 beispielsweise nach der Tränkung von der äußeren Oberfläche des Elektrodenkörpers wieder abgespült werden, um eine höhere Bedeckung und einen niedrigeren ESR zu erreichen. Dies führt zu erheblichen Materialverlusten und einem teuren Herstellungsverfahren.

Es besteht somit Bedarf, das in WO-A1-2007/031206 beschriebene Verfahren zur Herstellung von Feststoffelektrolytkondensatoren derart zu verbessern, dass sich bessere Bedeckungen mit Feststoffelektrolyt und damit höhere Kapazitäten bei einem einfacheren Verfahren ergeben.

Die Aufgabe bestand daher darin, ein solches Verfahren und die damit verbesserten Kondensatoren bereitzustellen.

Überraschend wurde nun gefunden, dass sich mittels Dispersionen, die elektrisch leitfähige Polythiophene enthalten und deren Viskosität sich bei Erhöhung des Feststoffgehalts weniger stark erhöht, Feststoffelektrolyte für Kondensatoren herstellen lassen, die einen deutlich verbesserten Bedeckungsgrad mit Feststoffelektrolyt und damit höhere Kapazitäten erreichen und gleichzeitig einfacher aufzubringen sind.

Die Abhängigkeit der Viskosität vom Feststoffgehalt hat überraschenderweise einen sehr großen Einfluss auf den Bedeckungsgrad des porösen Elektrodenköper mit dem Feststoffelektrolyten. Mit Dispersionen, deren Viskosität bei Entzug von Lösungsmittel, wie es beim Trocknen geschieht, weniger stark ansteigt, lassen sich deutlich höhere Bedeckungsgrade des Feststoffelektrolyten erreichen als mit Dispersionen, deren Viskosität sich stark erhöht. Dies ist insbesondere daher überraschend, da selbst Dispersionen, deren Viskosität und Feststoffgehalt sich beim Aufbringen auf den Elektrodenkörper nicht unterscheiden, zu unterschiedlichen Bedeckungsgraden führen, wenn die Viskositäten der Dispersionen unterschiedlich stark mit dem Feststoffgehalt ansteigen.

Gegenstand der vorliegenden Erfindung ist eine Dispersion A) enthaltend wenigstens Teilchen B) enthaltend ein elektrisch leitfähiges Polythiophen, das gegebenenfalls substituiert ist, und ein Dispersionsmittel D), wobei die Dispersion A) als Dispersionsmittel D) Wasser enthält, wobei das Polythiophen ein kationisches Polythiophen ist, wobei die Teilchen B) zusätzlich wenigstens ein Polyanion enthalten und wobei das kationische Polythiophen in Form eines Polythiophen/Polyanion-Komplexes vorliegt, wobei das Polythiophen Poly(3,4-ethylendioxythiophen) ist und wobei das Polyanion an Anion der Polystyrolsulfonsäure ist, dadurch gekennzeichnet, dass für die Dispersion A) das Integral der Viskosität, welche dargestellt ist als Funktion des Feststoffgehalts, im Integrationsbereich von 0,4% Feststoff bis 5% Feststoff kleiner als 2500 mPas×% ist, wobei die Viskosität mit einem Rheometer in mPas bei 20°C und einer Scherrate von 100 s$^{-1}$ und der Feststoffgehalt in Prozent bestimmt wird, dass die Teilchen B) enthaltend ein Polythiophen im trockenen Zustand eine spezifische elektrische Leitfähigkeit größer als 100 S/cm besitzen und dass die Teilchen B) des leitfähigen Polymers in der Dispersion A) einen mittleren Durchmesser von 1-100 nm haben.

Offenbart ist auch ein Verfahren zur Herstellung eines Elektrolytkondensators, wenigstens umfassend, dass

a) auf einen porösen Körper, wenigstens umfassend

einen porösen Elektrodenkörper (2) eines Elektrodenmaterials und ein Dielektrikum (3), das die Oberfläche dieses Elektrodenmaterials bedeckt,

eine erfindungsgemäße Dispersion A) aufgebracht wird,

b) und zur Bildung eines Feststoffelektrolyten (4), der die Dielektrikumsoberfläche ganz oder teilweise bedeckt, das Dispersionmittel D) wenigstens teilweise entfernt wird -

Bevorzugt ist das Integral der Viskosität, kleiner als 2000 mPas×%, besonders bevorzugt kleiner als 1500 mPas×%, ganz besonders bevorzugt kleiner als 1100 mPas×% und überaus bevorzugt kleiner als 600 mPas×%, wobei die Viskosität mit einem Rheometer in mPas bei 20°C und einer Scherrate von 100 s$^{-1}$ und der Feststoffgehalt in Prozent bestimmt wird.

Das Integral der Viskosität als Funktion des Feststoffgehalts wird wie folgt bestimmt: Zunächst wird die Viskosität der Dispersion bei verschiedenen Feststoffgehalten im Bereich 0,4% bis 5% mit einem Rheometer in mPas bei 20°C und einer Scherrate von 100 s$^{-1}$ bestimmt. Der Feststoffgehalt wird dazu über Zugabe oder Abdampfen von dem Dispersionsmittel verändert. Um das Integral mit einer hinreichende Genauigkeit zu ermitteln, wird dabei für jeden der Prozentbereiche 0,4% bis kleiner 1%, 1% bis kleiner 2%, 2% bis kleiner 3%, 3% bis kleiner 4%, 4% bis kleiner 5% und 5% mindestens für einen Feststoffgehalt die Viskosität bestimmt. Aus den Viskositätswerten bei gegebenem Feststoffgehalt wird nach bekannten Regeln der Mathematik das Integral der Viskosität im Integrationsbereich 0,4% bis 5% berechnet. Dies kann beispielsweise über die Sehnentrapezregel erfolgen: Wird die Viskosität $\eta$ beispielsweise für jeweils einen Feststoffgehalt $x_i$ aus obigen sechs Prozentbereichen bestimmt, so ergibt sich die Fläche $A_i$ des Trapez zwischen zwei benachbarten Werten $\eta(x_i)$ und $\eta(x_{i+1})$ über die Formel:

$$A_i = \frac{x_{i+1} - x_i}{2} * (\eta(x_i) + \eta(x_{i+1}))$$

Das Integral I ergibt sich dann aus der Summe der einzelnen Trapezflächen:

$$I = \sum_{i=1}^{5} A_i$$

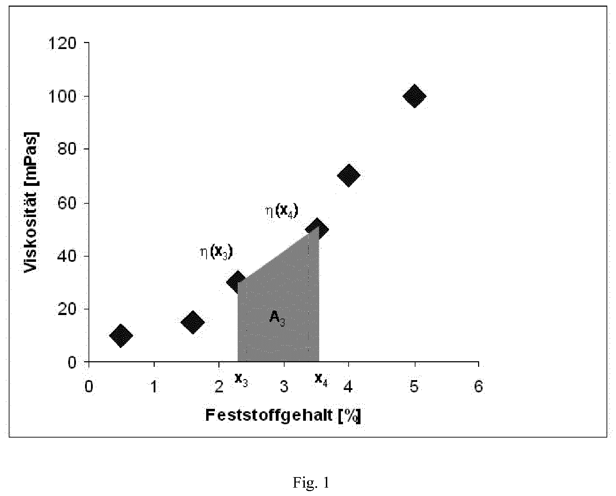

Fig. 1 zeigt an einem Beispiel die Trapezfläche $A_3$.

Die Teilchen B) der Dispersion A) haben im trockenen Zustand eine spezifische elektrische Leitfähigkeit von größer als 100 S/cm.

Die spezifische elektrische Leitfähigkeit der Teilchen B) im trockenen Zustand ist dabei die spezifische elektrische Leitfähigkeit des Films im trockenen Zustand, der sich beim Trocknen der Dispersion A) aus den Teilchen B) bildet.

Bevorzugt weisen die Teilchen B) im getrockneten Zustand eine spezifische elektrische Leitfähigkeit von größer 150 S/cm, besonders bevorzugt größer 200 S/cm, ganz besonders bevorzugt größer 250 S/cm, überaus bevorzugt größer 300 S/cm und in einer besonders bevorzugten Ausführungsform größer 400 S/cm auf.

Die Viskosität der Dispersion A) kann je nach Aufbringungsart zwischen 0,1 und 1000 mPa•s (gemessen mit einem Rheometer bei 20°C und einer Scherrate von 100 s$^{-1}$) betragen. Bevorzugt beträgt die Viskosität 0,1 bis 500 mPa•s, besonders bevorzugt zwischen 1 bis 200 mPa•s, ganz besonders bevorzugt 1 bis 100 mPa•s , überaus bevorzugt 1 bis 50 mPas und in einer besonders bevorzugten Ausführungsform 1 bis 30 mPas.

Der Feststoffgehalt der Dispersion A) beträgt 0,1 - 90 Gew.-%, bevorzugt 0,1 - 30 Gew.-%, ganz besonders bevorzugt 0.3 - 10 Gew.-%, überaus bevorzugt 0.5 - 5% Gew.-%.

Der Feststoffgehalt wird bestimmt über Trocknung des Dispersion A) bei einer Temperatur, die hinreichend hoch ist, um das Dispersionsmittel zu entfernen, dabei jedoch nicht den Feststoff zersetzt.

Die Teilchen B) des leitfähigen Polythiophens in der Dispersion A) haben in dem Verfahren einen mittleren Durchmesser von 1 bis 100 nm, bevorzugt einen mittleren Durchmesser von 1 bis 80 nm, besonders bevorzugt von 1 bis 50 nm, ganz besonders bevorzugt von 5 bis 40 nm.

Die Bestimmung des Durchmessers der Teilchen B) erfolgt über eine Ultrazentrifugenmessung. Das allgemeine Vorgehen ist in Colloid Polym. Sci. 267, 1113-1116 (1989) beschrieben. Bei Teilchen B), die in der Dispersion quellen, wird die Teilchengröße im gequollenen Zustand bestimmt. Eine Durchmesserverteilung der Teilchen B) bezieht sich auf eine Massenverteilung der Teilchen in der Dispersion in Abhängigkeit vom Teilchendurchmesser.

Die Teilchen B) des leitfähigen Polymers in der Dispersion A) haben bevorzugt einen $d_{90}$ Wert der Durchmesserverteilung von kleiner 150 nm, besonders bevorzugt kleiner 100 nm, ganz besonders bevorzugt kleiner 80 nm und überaus bevorzugt kleiner 50 nm.

Die Teilchen B) des leitfähigen Polymers in der Dispersion A) haben bevorzugt einen $d_{10}$ Wert der Durchmesserverteilung größer 1 nm, besonders bevorzugt größer 3 nm, ganz besonders bevorzugt größer 5nm.

Der $d_{10}$ Wert der Durchmesserverteilung besagt dabei, dass 10% der Gesamtmasse aller Teilchen B) des leitfähigen Polymers in der Dispersion A) solchen Teilchen B) zugeordnet werden kann, die einen Durchmesser kleiner oder gleich dem $d_{10}$ Wert besitzen. Der $d_{90}$ Wert der Durchmesserverteilung besagt, dass 90% der Gesamtmasse aller Teilchen B) des leitfähigen Polymers in der Dispersion A) solchen Teilchen B) zugeordnet werden kann, die einen Durchmesser kleiner oder gleich dem $d_{90}$ Wert besitzen.

Die Dispersion A) enthält bevorzugt keine oder nur geringe Mengen an Metallen und Übergangsmetallen. Unter Metallen werden hier Metalle oder Metallionen von Haupt- oder Nebengruppenmetallen, letztere im Folgenden auch als Übergangsmetalle bezeichnet, des Periodensystems der Elemente verstanden. Bekanntlich können insbesondere Übergangsmetalle das Dielektrikum schädigen, so dass die hieraus resultierenden erhöhten Restströme die Lebensdauer der Kondensatoren deutlich reduzieren oder gar einen Einsatz der Kondensatoren unter harschen Bedingungen, wie hohen Temperaturen und/oder hoher Luftfeuchte, unmöglich machen.

Die Dispersion A) hat bevorzugt einen Gehalt an Metallen kleiner 5000 mg/kg, besonders bevorzugt kleiner 1000 mg/kg, ganz besonders bevorzugt kleiner 200 mg/kg. Als Metalle sind hier beispielsweise Na, K, Mg, Al, Ca, Fe, Cr, Mn, Co, Ni, Cu, Ru, Ce oder Zn genannt.

Die Dispersion A) hat bevorzugt einen Gehalt an Übergangsmetallen kleiner 1000 mg/kg, besonders bevorzugt kleiner 100 mg/kg, ganz besonders bevorzugt kleiner 20 mg/kg. Als Übergangsmetalle sind hier beispielsweise Fe, Cu, Cr, Mn, Ni, Ru, Ce, Zn oder Co genannt.

Die Dispersion A) hat bevorzugt einen Eisengehalt kleiner 1000 mg/kg, besonders bevorzugt kleiner 100 mg/kg, ganz besonders bevorzugt kleiner 20 mg/kg.

Die niedrigen Konzentrationen an Metallen in den Dispersionen haben den großen Vorteil, dass das Dielektrikum bei Bildung des Feststoffelektrolyten und im späteren Betrieb des Kondensators nicht geschädigt wird.

Das Elektrodenmaterial bildet im Elektrolytkondensator hergestellt nach dem erfindungsgemäßen Verfahren einen porösen Körper mit großer Oberfläche, und liegt z.B. in Form eines porösen Sinterkörpers oder einer aufgerauten Folie vor. Im Folgenden wird dieser poröse Körper auch kurz als Elektrodenkörper bezeichnet.

Der mit einem Dielektrikum bedeckte Elektrodenkörper wird im Folgenden auch kurz als oxidierter Elektrodenkörper bezeichnet. Die Bezeichnung "oxidierter Elektrodenkörper" umfasst auch solche Elektrodenkörper, die mit einem Dielektrikum bedeckt sind, das nicht durch Oxidation des Elektrodenkörpers hergestellt wurde.

Der mit einem Dielektrikum sowie ganz oder teilweise mit einem Feststoffelektrolyten bedeckte Elektrodenkörper wird im Folgenden auch kurz als Kondensatorkörper bezeichnet.

Unter äußerer Oberfläche des Kondensatorkörpers werden die Außenflächen des Kondensatorkörpers verstanden.

Die Dispersionen A) können ein oder mehrere Dispersionsmittel D) enthalten. Als Dispersionsmittel D) seien beispielsweise folgende Lösungsmittel genannt: aliphatische Alkohole wie Methanol, Ethanol, i-Propanol und Butanol; aliphatische Ketone wie Aceton und Methylethylketon; aliphatische Carbonsäureester wie Essigsäureethylester und Essigsäurebutylester; aromatische Kohlenwasserstoffe wie Toluol und Xylol; aliphatische Kohlenwasserstoffe wie Hexan, Heptan und Cyclohexan; Chlorkohlenwasserstoffe wie Dichlormethan und Dichlorethan; aliphatische Nitrile wie Acetonitril, aliphatische Sulfoxide und Sulfone wie Dimethylsulfoxid und Sulfolan; aliphatische Carbonsäureamide wie Methylacetamid, Dimethylacetamid und Dimethylformamid; aliphatische und araliphatische Ether wie Diethylether und Anisol. Weiterhin kann auch Wasser oder ein Gemisch aus Wasser mit den vorgenannten organischen Lösungsmitteln als Dispersionsmittel D) verwendet werden.

Bevorzugte Dispersionsmittel D) sind Wasser oder andere protische Lösungsmittel wie Alkohole, z.B. Methanol, Ethanol, i-Propanol und Butanol, sowie Mischungen von Wasser mit diesen Alkoholen, besonders bevorzugtes Lösungsmittel ist Wasser.

Die Dispersion A) kann außerdem weitere Komponenten enthalten wie oberflächenaktive Substanzen, z.B. ionische und/oder nichtionische Tenside; Haftvermittler, wie z.B. organofunktionelle Silane bzw. deren Hydrolysate, z.B. 3-Glycidoxypropyltrialkoxysilan, 3-Aminopropyltriethoxysilan, 3-Mercaptopropyltrimethoxysilan, 3-Metacryloxypropyltrimethoxysilan, Vinyltrimethoxysilan oder Octyltriethoxysilan; Vernetzer wie Melaminverbindungen, verkappte Isocyanate, funktionelle Silane - z.B. Tetraethoxysilan, Alkoxysilanhydrolysate, z.B. auf Basis von Tetraethoxysilan, Epoxysilane wie 3-Glycidoxypropyltrialkoxysilan - Polyurethane, Polyacrylate oder Polyolefindispersionen oder weitere Additive.

Bevorzugt enthalten die Dispersionen A) weitere Additive, die die Leitfähigkeit steigern, wie z.B. ethergruppenhaltige Verbindungen, wie z.B. Tetrahydrofuran; lactongruppenhaltige Verbindungen wie γ-Butyrolacton, γ-Valerolacton; amid- oder lactamgruppenhaltige Verbindungen wie Caprolactam, N-Methylcaprolactam, N,N-Dimethylacetamid, N-Methylacetamid, N,N-Dimethylformamid (DMF), N-Methylformamid, N-Methylformanilid, N-Methylpyrrolidon (NMP), N-Octylpyrrolidon, Pyrrolidon; Sulfone und Sulfoxide, wie z.B. Sulfolan (Tetramethylensulfon), Dimethylsulfoxid (DMSO); Zucker oder Zuckerderivate, wie z.B. Saccharose, Glucose, Fructose, Lactose, Zuckeralkohole, wie z.B. Sorbit, Mannit;

Imide, wie z.B. Succinimid oder Maleimid; Furanderivate, wie z.B. 2- Furancarbonsäure, 3-Furancarbonsäure, und/oder Di- oder Polyalkohole, wie z.B. Ethylenglycol, Glycerin oder Di- bzw. Triethylenglycol. Besonders bevorzugt werden als leitfähigkeitserhöhende Additive Tetrahydrofuran, N-Methylformamid, N-Methylpyrrolidon, Ethylenglycol, Dimethylsulfoxid oder Sorbit eingesetzt. Die weiteren Additive können entweder jeweils alleine oder in jeder beliebigen Kombination davon in der Dispersion A) enthalten sein.

Die Dispersionen A) können außerdem ein oder mehrere Binder enthalten. Bevorzugt sind polymere, organische Binder wie beispielsweise Polyvinylalkohole, Polyvinylpyrrolidone, Polyvinylchloride, Polyvinylacetate, Polyvinylbutyrate, Polyacrylsäureester, Polyacrylsäureamide, Polymethacrylsäureester, Polymethacrylsäureamide, Polyacrylnitrile, Styrol/Acrylsäureester-, Vinylacetat/Acrylsäureester- und Ethylen/VinylacetatCopolymerisate, Polybutadiene, Polyisoprene, Polystyrole, Polyether, Polyester, Polycarbonate, Polyurethane, Polyamide, Polyimide, Polysulfone, Melamin-Formaldehyharze, Epoxidharze, Siliconharze oder Cellulosen in Frage. Weiterhin kommen bevorzugt als polymere organische Binder auch solche in Frage, die durch Zugabe von Vernetzern wie beispielsweise Melaminverbindungen, verkappten Isocyanaten oder funktionellen Silanen, wie z.B. 3-Glycidoxypropyltrialkoxysilan, Tetraethoxysilan und Tetraethoxysilanhydrolysat, oder vernetzbaren Polymeren wie z.B. Polyurethanen, Polyacrylaten oder Polyolefinen und anschließende Vernetzung erzeugt werden. Solche als polymere Binder geeigneten Vernetzungsprodukte können auch beispielsweise durch Reaktion der zugegebenen Vernetzer mit gegebenenfalls in der Dispersion A) enthaltenen polymeren Anionen gebildet werden. Bevorzugt sind solche Binder, die eine ausreichende Temperaturstabilität aufweisen, um den Temperaturbelastungen zu widerstehen, denen die fertigen Kondensatoren später ausgesetzt werden, z.B. Löttemperaturen von 220 bis 260°C.

Der Feststoffgehalt des polymerem Binders in der Dispersion A) beträgt 0,1 - 90 Gewichtsprozent (Gew.-%), bevorzugt 0,5 - 30 Gew.-% und ganz besonders bevorzugt 0.5 - 10 Gew.-%.

Die Dispersionen A) können einen pH Wert von 1 bis 14 haben, bevorzugt ist ein pH Wert von 1 bis 8. Für korrosionsempfindliche Dielektrika, wie beispielsweise Aluminiumoxide oder Nioboxide, werden Dispersionen bevorzugt mit einem pH Wert von 3 bis 8, um das Dielektrikum nicht zu schädigen.

Zur Einstellung des pH Werts können den Dispersionen beispielsweise Basen oder Säuren zugesetzt werden. Bevorzugt sind solche Zusätze, die die Filmbildung der Dispersionen nicht beeinträchtigen und bei höheren Temperaturen, z.B. Löttemperaturen, nicht flüchtig sind, sondern unter diesen Bedingungen im Feststoffelektrolyten verbleiben, wie z.B. die Basen 2-Dimethylaminoethanol, 2,2'-Iminodiethanol oder 2,2',2"-Nitrilotriethanol und die Säure Polystyrolsulfonsäure.

Fig. 2 beschreibt eine schematische Darstellung des Aufbaus eines Feststoffelektrolytkondensators am Beispiel eines Tantalkondensators mit

| 1 | Kondensatorkörper |
| 5 | gegebenenfalls vorhandene leitfähige Außenschicht |
| 6 | Graphit/Silberschicht |
| 7 | Drahtkontakt zum Elektrodenkörper 2 |
| 8 | äußeren Kontakten |
| 9 | Verkapselung |
| 10 | Bildausschnitt |

Fig. 3 beschreibt den vergrößerten Bildausschnitt 10 aus Fig. 2 der den schematischer Schichtaufbau des Tantalkondensators mit

| 10 | Bildausschnitt |
| 2 | porösem Elektrodenkörper (Anode) |
| 3 | Dielektrikum |
| 4 | Feststoffelektrolyt (Kathode) |
| 5 | gegebenenfalls vorhandene leitfähige Außenschicht |
| 6 | Graphit/Silberschicht |

wiedergibt.

Fig. 4 beschreibt eine schematische Darstellung des Aufbaus eines Feststoffelektrolytkondensators am Beispiel eines Aluminium Wickelkondensators mit

| 11 | poröse Anodenfolie |
| 12 | Kontaktdraht für Anodenfolie |

13     Kathodenfolie

14     Kontaktdraht für Kathodenfolie

15     Separator

16     Klebeband

Prinzipiell kann ein solcher Elektrolytkondensator folgendermaßen hergestellt werden: Zunächst wird z.B. ein Ventilmetall-Pulver mit einer hohen Oberfläche gepresst und zu einem porösen Elektrodenkörper gesintert. Hierbei wird üblicherweise ein elektrischer Kontaktdraht bevorzugt aus einem Ventilmetall wie z. B. Tantal mit in den Elektrodenkörper eingepresst. Es können alternativ auch Metallfolien geätzt werden, um eine poröse Folie zu erhalten. Bei einem Wickelkondensator wird eine poröse Anodenfolie, die den Elektrodenkörper bildet, und eine Kathodenfolie durch einen Separator getrennt und aufgewickelt.

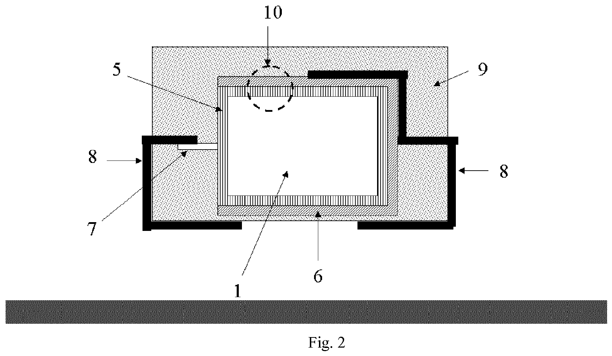

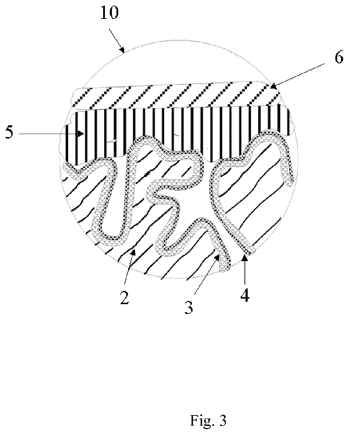

Der Elektrodenkörper wird dann beispielsweise durch elektrochemische Oxidation, mit einem Dielektrikum, d. h. einer Oxidschicht, überzogen. Auf den oxidierten Elektrodenkörper wird daraufhin eine Dispersion A) enthaltend wenigstens Teilchen B) eines elektrisch leitfähigen Polythiophens und ein Dispersionsmittel D) aufgebracht und zur Bildung des Feststoffelektrolyten das Dispersionsmittel D) wenigstens teilweise entfernt wird. Gegebenenfalls werden weitere Schichten (in Fig. 2 und Fig. 3 mit leitfähiger Außenschicht (5) bezeichnet) auf die äußere Oberfläche des Kondensatorkörpers aufgebracht. Ein Überzug mit gut leitfähigen Schichten, wie Graphit und Silber, oder ein metallischer Kathodenkörper mit Separator, wie z.B. bei Aluminium-Wickelkondensatoren, dient als Elektrode zur Ableitung des Stroms. Schließlich wird der Kondensator gegebenenfalls kontaktiert und abschließend eingekapselt.

Weiterhin bevorzugt ist ein Verfahren zur Herstellung von Elektrolytkondensatoren, dadurch gekennzeichnet, dass es sich bei dem Elektrodenmaterial um ein Ventilmetall oder um eine Verbindung mit einem Ventilmetall vergleichbaren elektrischen Eigenschaften handelt.

Als Ventilmetall sind im Rahmen der Erfindung solche Metalle zu verstehen, deren Oxidschichten den Stromfluss nicht in beide Richtungen gleichermaßen ermöglichen: Bei anodisch angelegter Spannung sperren die Oxidschichten der Ventilmetalle den Stromfluss, während es bei kathodisch angelegter Spannung zu großen Strömen kommt, die die Oxidschicht zerstören können. Zu den Ventilmetallen zählen Be, Mg, Al, Ge, Si, Sn, Sb, Bi, Ti, Zr, Hf, V, Nb, Ta und W sowie eine Legierung oder Verbindung von wenigstens einem dieser Metalle mit anderen Elementen. Die bekanntesten Vertretern der Ventilmetalle sind Al, Ta, und Nb. Verbindungen mit einem Ventilmetall vergleichbaren elektrischen Eigenschaften sind solche mit metallischer Leitfähigkeit, welche oxidierbar sind und deren Oxidschichten die vorangehend beschriebenen Eigenschaften besitzen. Beispielsweise besitzt NbO metallische Leitfähigkeit, wird jedoch im Allgemeinen nicht als Ventilmetall betrachtet. Schichten von oxidiertem NbO weisen jedoch die typischen Eigenschaften von Ventilmetalloxidschichten auf, so dass NbO oder eine Legierung oder Verbindung von NbO mit anderen Elementen typische Beispiele für solche Verbindungen mit einem Ventilmetall vergleichbaren elektrischen Eigenschaften sind.

Bevorzugt sind Elektrodenmaterialien aus Tantal, Aluminium und solche Elektrodenmaterialien, die auf Niob oder Nioboxid basieren.

Unter Elektrodenmaterialien, die auf Niob oder Nioboxid basieren, werden solche Materialien verstanden, bei denen Niob oder Nioboxid die Komponente mit dem größten Stoffmengenanteil darstellen.

Bei dem Elektrodenmaterial, das auf Niob oder Nioboxid basiert, handelt es sich bevorzugt um Niob, NbO, ein Nioboxid $NbO_x$, wobei x Werte von 0,8 bis 1,2 annehmen kann, Niobnitrid, Nioboxynitrid oder Mischungen dieser Materialien oder um eine Legierung oder Verbindung von wenigstens einem dieser Materialien mit anderen Elementen handelt.

Bevorzugt als Legierungen sind Legierungen mit wenigstens einem Ventilmetall, wie beispielsweise Be, Mg, Al, Ge, Si, Sn, Sb, Bi, Ti, Zr, Hf, V, Nb, Ta oder W.

Demzufolge sind unter dem Begriff "oxidierbares Metall" nicht nur Metalle, sondern auch eine Legierung oder Verbindung eines Metalls mit anderen Elementen gemeint, sofern sie metallische Leitfähigkeit besitzen und oxidierbar sind.

Die oxidierbaren Metalle werden beispielsweise in Pulverform zu einem porösen Elektrodenkörper gesintert oder es wird einem metallischen Körper eine poröse Struktur aufgeprägt. Letzteres kann z.B. durch Ätzen einer Folie erfolgen.

Die porösen Elektrodenkörper werden beispielsweise in einem geeigneten Elektrolyten, wie z.B. Phosphorsäure, durch Anlegen einer Spannung oxidiert. Die Höhe dieser Formierspannung ist abhängig von der zu erzielenden Oxidschichtdicke bzw. der späteren Anwendungsspannung des Kondensators. Bevorzugte Formierspannungen sind 1 bis 800 V, besonders bevorzugt 1 bis 300 V.

Bevorzugt werden zur Herstellung des Elektrodenkörpers Metallpulver mit einer spezifischen Ladung von 1000 bis 1 000000 μC/g, besonders bevorzugt mit einer spezifischen Ladung von 5000 bis 500000 μC/g, ganz besonders

bevorzugt mit einer spezifischen Ladung von 5000 bis 300000 μC/g, überaus bevorzugt mit einer spezifischen Ladung von 10000 bis 200000 μC/g.

Die spezifische Ladung des Metallpulvers berechnet sich dabei wie folgt:

$$\text{Spezifische Ladung des Metallpulvers} = (\text{Kapazität} \times \text{Anodisierspannung})/ \text{Gewicht des oxidierten Elektrodenkörpers.}$$

Die Kapazität ergibt sich dabei aus der Kapazität des oxidierten Elektrodenkörpers gemessen bei 120 Hz in einem wässrigen Elektrolyten. Die elektrische Leitfähigkeit des Elektrolyten ist dabei hinreichend groß, so dass es bei 120 Hz noch nicht zu einem Kapazitätsabfall aufgrund des elektrischen Widerstands des Elektrolyten kommt. Beispielsweise werden 18 %ige wässrige Schwefelsäure-Elektrolyte zur Messung eingesetzt.

Die eingesetzten Elektrodenkörper haben eine Porosität von 10 bis 90 %, bevorzugt von 30 bis 80 %, besonders bevorzugt von 50 bis 80 %.

Die porösen Elektrodenkörper haben einen mittleren Porendurchmesser von 10 bis 10000 nm, bevorzugt von 50 bis 5000 nm, besonders bevorzugt von 100 bis 3000 nm.

Offenbart ist demgemäß ein Verfahren zur Herstellung von Elektrolytkondensatoren, dadurch gekennzeichnet, dass es sich bei dem Ventilmetall oder der Verbindung einem Ventilmetall vergleichbaren elektrischen Eigenschaften um Tantal, Niob, Aluminium, Titan, Zirkonium, Hafnium, Vanadium, eine Legierung oder Verbindung von wenigstens einem dieser Metalle mit anderen Elementen, NbO oder eine Legierung oder Verbindung von NbO mit anderen Elementen handelt.

Das Dielektrikum besteht bevorzugt aus einem Oxid des Elektrodenmaterials. Es enthält gegebenenfalls weitere Elemente und/oder Verbindungen.

Die Kapazität des Kondensators hängt neben der Art des Dielektrikums von der Oberfläche und der Dicke des Dielektrikums ab. Die spezifische Ladung ist ein Maß dafür, wie viel Ladung pro Gewichtseinheit der oxidierte Elektrodenkörper aufnehmen kann. Die spezifische Ladung berechnet sich wie folgt:

$$\text{Spezifische Ladung des Kondensators} = (\text{Kapazität} \times \text{Nennspannung})/ \text{Gewicht des oxidierten Elektrodenkörpers.}$$

Die Kapazität ergibt sich dabei aus der Kapazität des fertigen Kondensators gemessen bei 120 Hz und die Nennspannung ist die spezifizierte Einsatzspannung des Kondensators (rated voltage). Das Gewicht des oxidierten Elektrodenkörpers bezieht sich auf das reine Gewicht des mit Dielektrikum überzogenen porösen Elektrodenmaterials ohne Polymer, Kontakte und Verkapselungen.

Bevorzugt weisen die nach dem Verfahren hergestellten Elektrolytkondensatoren eine spezifische Ladung von 500 bis 500000 μC/g, besonders bevorzugt mit einer spezifischen Ladung von 2500 bis 250000 μC/g, ganz besonders bevorzugt mit einer spezifischen Ladung von 2500 bis 1500000 μC/g, überaus bevorzugt mit einer spezifischen Ladung von 5000 bis 100000 μC/g.

Die Herstellung der Dispersionen A) erfolgt aus den oben beschriebenen Vorstufen beispielsweise analog zu den in EP-A 440 957 genannten Bedingungen. Eine verbesserte Variante für die Herstellung der Dispersionen stellt der Einsatz von Ionentauscher zur Entfernung des anorganischen Salzgehaltes oder eines Teils davon dar. Eine solche Variante ist beispielsweise in DE-A 19627071 beschrieben. Der Ionentauscher kann beispielsweise mit dem Produkt verrührt werden oder das Produkt wird über eine mit Ionenaustauschersäule gefüllt Säule gefördert. Durch die Verwendung des Ionenaustauschers können beispielsweise die oben beschriebenen niedrigen Metallgehalte erzielt werden.

Die Teilchengröße der Teilchen B) in der Dispersion A) kann beispielsweise mittels eines Hochdruckhomogenisators verringert werden. Dieser Vorgang kann auch wiederholt werden um den Effekt zu vergrößern. Besonders Drücke zwischen 100 und 2000 bar haben sich als vorteilhaft erwiesen, um die Teilchengröße stark zu reduzieren.

Auch eine Herstellung eines Polythiophen/Polyanion-Komplexes und anschließende Dispergierung oder Redispergierung in einem oder mehreren Lösungsmittel(n) ist möglich.

Die Teilchen B) des leitfähigen Polymers bilden bevorzugt eine stabile Dispersion. Es können jedoch auch instabile Dispersionen verwendet werden, in dem diese vor Gebrauch beispielsweise gerührt, gerollt oder aufgeschüttelt werden, um eine gleichmäßige Verteilung der Teilchen B) zu gewährleisten.

Die Dispersionen A) werden nach bekannten Verfahren, z.B. durch Spincoating, Tränkung, Gießen, Auftropfen, Spritzen, Aufsprühen, Aufrakeln, Bestreichen oder Bedrucken, beispielsweise Ink-jet-, Sieb- oder Tampondrucken, auf das Dielektrikum des Elektrodenkörpers aufgebracht.

Das Eindringen der Dispersion in den porösen Elektrodenkörper kann beispielsweise durch Über- oder Unterdruck, Vibration, Ultraschall oder Wärme erleichtert werden.

Die Aufbringung kann direkt oder unter Verwendung eines Haftvermittlers, beispielsweise eines Silans, wie z.B. organofunktionelle Silane bzw. deren Hydrolysate, z.B. 3-Glycidoxypropyltrialkoxysilan, 3-Aminopropyltriethoxysilan, 3-Mercaptopropyltrimethoxysilan, 3-Metacryloxypropyltrimethoxysilan, Vinyltri-methoxysilan oder Octyltriethoxysilan, und/oder einer oder mehrerer anderer funktionellen Schichten auf das Dielektrikum des Elektrodenkörpers erfolgen.

Nach dem Aufbringen der Dispersion A) wird das Dispersionsmittel D) vorzugsweise entfernt, damit sich aus den Teilchen B) und gegebenenfalls weiteren Additiven in der Dispersion der Feststoffelektrolyt ausbilden kann. Es kann aber auch mindestens ein Teil des Dispersionsmittels D) im Feststoffelektrolyten verbleiben.

Das Entfernen des Dispersionsmittels D) nach dem Aufbringen der Dispersion kann durch einfaches Verdampfen bei Raumtemperatur erfolgen. Zur Erzielung höherer Verarbeitungsgeschwindigkeiten ist es jedoch vorteilhafter, die Dispersionsmittel D) bei erhöhten Temperaturen, z.B. bei Temperaturen von 20 bis zu 300°C, bevorzugt 40 bis zu 250°C, zu entfernen. Eine thermische Nachbehandlung kann unmittelbar mit dem Entfernen des Lösungsmittel verbunden oder aber auch in zeitlichem Abstand von der Fertigstellung der Beschichtung vorgenommen werden.

Die Dauer der Wärmebehandlung beträgt in Abhängigkeit von der Art des für die Beschichtung verwendeten Dispersion 5 Sekunden bis mehrere Stunden. Für die thermische Behandlung können auch Temperaturprofile mit unterschiedlichen Temperaturen und Verweilzeiten eingesetzt werden.

Die Wärmebehandlung kann z.B. in der Weise ausgeführt werden, dass man die beschichteten oxidierten Elektrodenkörper mit einer solchen Geschwindigkeit durch eine auf der gewünschten Temperatur befindliche Wärmekammer bewegt, dass die gewünschte Verweilzeit bei der gewählten Temperatur erreicht wird, oder mit einer auf der gewünschten Temperatur befindlichen Heizplatte für die gewünschte Verweilzeit in Kontakt bringt. Des Weiteren kann die Wärmebehandlung beispielsweise in einem Wärmeofen oder mehreren Wärmeöfen mit jeweils unterschiedlichen Temperaturen erfolgen.

Je nach Art des oxidierten Elektrodenkörpers kann es vorteilhaft sein, den oxidierten Elektrodenkörper weitere Male mit den Dispersionen zu imprägnieren, um dickere Polymerschichten und/oder eine größere Bedeckung der Dielektrikumsoberfläche zu erzielen.

Bevorzugt erfolgt das Aufbringen der Dispersion A) und das wenigstens teilweise Entfernen des Dispersionsmittels D) mehrfach.

Die Bedeckung des Dielektrikums mit dem Feststoffelektrolyten kann folgendermaßen bestimmt werden: Die Kapazität des Kondensators wird im trockenen und feuchten Zustand bei 120 Hz gemessen. Der Bedeckungsgrad ist das Verhältnis der Kapazität im trockenen Zustand zu der Kapazität im feuchten Zustand ausgedrückt in Prozent. Trockener Zustand bedeutet, dass der Kondensator über mehrere Stunden bei erhöhter Temperatur (80-120°C) getrocknet wurde, bevor er vermessen wird. Feuchter Zustand bedeutet, dass der Kondensator über mehrere Stunden einer gesättigten Luftfeuchte bei erhöhtem Druck, beispielsweise in einem Dampfdruckkessel, ausgesetzt wird. Die Feuchtigkeit dringt dabei in Poren ein, die vom Feststoffelektrolyten nicht bedeckt sind, und wirkt dort als Flüssigelektrolyt.

Die Bedeckung des Dielektrikums durch den Feststoffelektrolyten ist vorzugsweise größer als 50 %, besonders bevorzugt größer als 70 %, ganz besonders bevorzugt größer als 80 %.

Nach Herstellung des Feststoffelektrolyten können auf dem Kondensatorkörper weitere leitfähige Schichten, wie z.B. eine leitfähige Außenschicht aufgebracht werden. Bevorzugt wird eine polymere Außenschicht, beispielsweise wie in der europäischen Patentanmeldung EP-A 1 524 678 beschrieben, aufgebracht. Weitere gut leitfähige Schichten wie beispielsweise Graphit- und/oder Silberschichten dienen als Stromkollektor. Bei Wickelkondensatoren dient eine Kathodenfolie, die von dem Kondensatorkörper (Anodenfolie) durch einen Separator getrennt ist, als Stromkollektor. Abschließend wird der Kondensator gegebenenfalls kontaktiert und abschließend verkapselt.

Das hierin offenbarte Verfahren zur Herstellung eines Elektrolytkondensators und die erfindungsgemäße Dispersion ermöglichen somit die Herstellung von Feststoffelektrolytkondensatoren mit niedrigem Äquivalenten Serienwiderstand (ESR) und niedrigem Reststrom, bei denen keine in-situ Polymerisation erforderlich ist. Das hierin offenbarte Verfahren zur Herstellung eines Elektrolytkondensators ist einfacher als das in WO-A1-2007/031206 beschriebene Verfahren und erreicht höhere Bedeckungsgrade mit dem Feststoffelektrolyten und somit höhere Kapazitäten. Offenbart werden auch Elektrolytkondensatoren hergestellt mit dem hierin offenbarten Verfahren. Die Elektrolytkondensatoren eignen sich aufgrund ihres niedrigen Reststroms und ihres niedrigen ESR hervorragend zur Verwendung als Bauteil in elektronischen Schaltungen, beispielsweise als Glättungskondensator (filter capacitor) oder Entstörkondensator (decoupling capacitor). Bevorzugt sind elektronische Schaltungen, wie sie sich beispielsweise in Computern (Desktop, Laptop, Server), in Computerperipheriegeräten (z.B. PC Karten), in tragbaren elektronischen Geräten, wie z.B. Mobiltelefonen, Digitalkameras oder Unterhaltungselektronik, in Geräten der Unterhaltungselektronik, wie z.B. in CD/DVD Spielern und Computerspielkonsolen, in Navigationssystemen, in Telekommunikations-einrichtungen, in Haushaltsgeräten, in Spannungsversorgungen oder in der Automobilelektronik befinden. Die folgenden Beispiele dienen der beispielhaften Erläuterung der Erfindung und sind nicht als Beschränkung aufzufassen.

**Beispiele**

**Vergleichsbeispiel 1**: Herstellung von einer Dispersion a) leitfähiger Polymere

In einem 2 1 Dreihalskolben mit Rührer und Innenthermometer wurden 868 g entionisiertes Wasser, 330 g einer wässrigen Polystyrolsulfonsäurelösung mit einem mittleren Molekulargewicht von 70000 und einem Feststoffgehalt von 3,8 Gew.-% vorgelegt. Die Reaktionstemperatur wurde zwischen 20 und 25°C gehalten. Unter Rühren wurden 5,1 g 3,4-Ethylendioxythiophen zugegeben. Die Lösung wurde 30 Minuten gerührt. Anschließend wurden 0,03 g Eisen(III)-sulfat und 9,5 g Natriumpersulfat zugegeben und die Lösung weitere 24 h gerührt.

Nach Abschluss der Reaktion wurden zur Entfernung anorganischer Salze 100 ml eines stark sauren Kationenaustauschers (Lewatit S100, Lanxess AG) und 250 ml eines schwach basischen Anionenaustauschers (Lewatit MP 62, Lanxess AG) zugegeben und die Lösung weitere 2 h gerührt. Der Ionenaustauscher wurde abfiltriert. Die Poly(3,4-ethylendioxythiophen)/Polystyrolsulfonat-Dispersion wurde zehnmal bei einem Druck von 700 bar mit einem Hochdruckhomogenisator homogenisiert. 100 g der Dispersion und 4g Dimethylsufoxid (DMSO) wurden in einem Becherglas mit Rührer intensiv zu einer Dispersion a) gemischt. Der Feststoffgehalt der Dispersion a) betrug 1.2% und die Viskosität 15 mPas.

Zur Bestimmung des Feststoffgehalts wurden 5 g der Dispersion 14 Stunden bei 100°C getrocknet.

Die Dispersion a) hatte folgende Teilchengrößenverteilung:

| | |
|---|---|
| $d_{10}$ | 20 nm |
| $d_{50}$ | 28 nm |
| $d_{90}$ | 47 nm |

Der Durchmesser der Teilchen des leitfähigen Polymers bezieht sich auf eine Massenverteilung der Teilchen in der Dispersion in Abhängigkeit vom Teilchendurchmesser. Die Bestimmung erfolgte über eine Ultrazentrifugenmessung. Die Teilchengröße wurde im gequollenen Zustand der Teilchen bestimmt.

Die Dispersionen a) wurde durch Verdünnung mit Wasser bzw. Aufkonzentration auf verschiedene Feststoffgehalte eingestellt und die jeweilige Viskosität der Dispersion bei einer Scherrate von 100 Hz und 20°C mit einem Rheometer (Haake) bestimmt.

Die Werte befinden sich in Tabelle 1.

Tabelle 1

| Dispersion a | |
|---|---|
| Feststoffgehalt [%] | Viskosität [mPas] |
| 0.40 | 3 |
| 0.80 | 8 |
| 1.20 | 15 |
| 1.60 | 31 |
| 1.90 | 44 |
| 2.20 | 93 |
| 2.70 | 173 |
| 3.00 | 230 |
| 4.00 | 875 |
| 5.00 | 2940 |

Das Integral der Viskosität der Dispersion a) im Integrationsbereich von 0.4% bis 5% wurde mittels der Sehnentrapezregel ermittelt und betrug 2635 mPas×%.

**Beispiel 1**: Herstellung von einer Dispersion b) leitfähiger Polymere

Dispersion b) wurde analog zu Dispersion a) aus dem Vergleichsbeispiel 1 hergestellt. Jedoch wurde die Dispersion nach der Hochdruckhomogenisierung auf 2.2% Feststoff aufkonzentriert, dann zusätzlich noch fünf Male bei einem Druck von 1500 bar homogenisiert und anschließend auf einen Feststoffgehalt von 1.25% mit Wasser verdünnt. 100 g der Dispersion und 4g Dimethylsufoxid (DMSO) wurden in einem Becherglas mit Rührer intensiv zu einer Dispersion b) gemischt. Der Feststoffgehalt der Dispersion b) betrug 1.2% und die Viskosität 15 mPas.

Die Dispersion b) hatte folgende Teilchengrößenverteilung:

| | |
|---|---|
| $d_{10}$ | 20 nm |
| $d_{50}$ | 29 nm |
| $d_{90}$ | 45 nm |

Eine ICP-Analyse der Metallgehalte der Dispersion b) ergab folgende Werte:

| | |
|---|---|
| Natrium (Na): | 100 mg/kg |
| Magnesium (Mg): | 0,60 mg/kg |
| Aluminium (Al): | 1,0 mg/kg |
| Silicium (Si): | 1,1 mg/kg |
| Phosphor (P): | 6,2 mg/kg |
| Kalium (K): | 0,63 mg/kg |
| Calcium (Ca): | 3,9 mg/kg |
| Chrom (Cr): | 0,18 mg/kg |
| Eisen (Fe): | 0,80 mg/kg |
| Zink (Zn): | <0,01 mg/kg |

Ein Teil der Dispersion b) wurde auf einen Glasobjektträger (26 mm×26 mm×1 mm) mittels eines Spincoaters (Chemat Technology KW-4A) aufgeschleudert. Die Probe wurde 10 min bei 120°C getrocknet. Anschließend wurden zwei gegenüberliegende Kanten des Objektträgers mit Leitsilber beschichtet. Nach Trocknung des Leitsilbers wurden die beiden Silberstreifen kontaktiert und mit einem Keithley 199 Multimeter der Oberflächenwiderstand ermittelt. Die Schichtdicke wurde mit einem Tencor Alpha Step 500 Surface Profiler bestimmt. Aus Oberflächenwiderstand und Schichtdicke d wurde die spezifische Leitfähigkeit σ nach σ = 1/( $R_\square$ × d) ermittelt. Die Schichtdicke betrug 60 nm und die spezifische Leitfähigkeit betrug 450 S/cm.

Die Dispersionen b) wurde durch Verdünnung mit Wasser bzw. Aufkonzentration auf verschiedene Feststoffgehalte eingestellt und die jeweilige Viskosität der Dispersion bei einer Scherrate von 100 Hz und 20°C mit einem Rheometer (Haake) bestimmt. Die Werte befinden sich in Tabelle 2.

Tabelle 2

| Dispersion b | |
|---|---|
| Feststoffgehalt [%] | Viskosität [mPas] |
| 0.40 | 3 |
| 0.80 | 8 |
| 1.20 | 15 |
| 1.80 | 27 |
| 2.20 | 41 |
| 2.60 | 68 |
| 3 | 95 |
| 4.00 | 353 |
| 5.00 | 1129 |
| 5.20 | 1428 |

Das Integral der Viskosität der Dispersion b) im Integrationsbereich von 0.4% bis 5% wurde mittels der Sehnentrapezregel ermittelt und betrug 1052 mPas×%.

**Beispiel 2:** Herstellung von einer Dispersion c) leitfähiger Polymere

Dispersion c) wurde analog zu Dispersion b) aus Beispiel 1 hergestellt. Jedoch erfolgt die zweite Homogenisierung bei einem Druck von 2500 bar. Der Feststoffgehalt der Dispersion c) betrug 1.2% und die Viskosität 7 mPas.

Die Dispersion c) hatte folgende Teilchengrößenverteilung:

| | |
|---|---|
| $d_{10}$ | 19 nm |
| $d_{50}$ | 27 nm |
| $d_{90}$ | 48 nm |

Die Dispersionen c) wurde durch Verdünnung mit Wasser bzw. Aufkonzentration auf verschiedene Feststoffgehalte eingestellt und die jeweilige Viskosität der Dispersion bei einer Scherrate von 100 Hz und 20°C mit einem Rheometer (Haake) bestimmt. Die Werte befinden sich in Tabelle 3.

Tabelle 3

| Dispersion c | |
|---|---|
| Feststoff [%] | Viskosität [mPas] |
| 0.40 | 2.5 |
| 0.80 | 4.5 |
| 1.20 | 7 |
| 1.60 | 12 |
| 2.00 | 20 |
| 2.30 | 28 |
| 3.00 | 45 |
| 4.10 | 167 |
| 5.00 | 363 |
| 5.80 | 536 |

Das Integral der Viskosität der Dispersion c) im Integrationsbereich von 0.4% bis 5% wurde mittels der Sehnentrapezregel ermittelt und betrug 402 mPas×%.

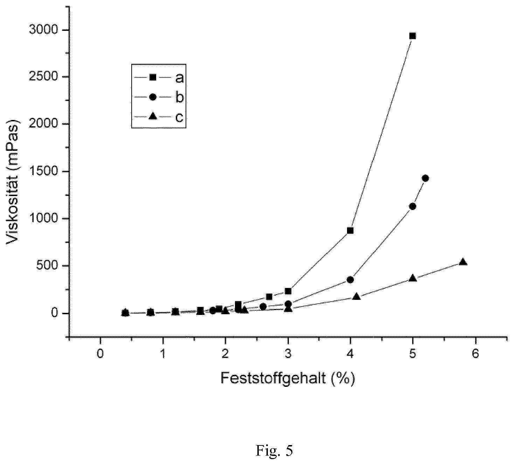

Fig. 5 zeigt den Verlauf der Viskosität der Dispersionen a), b) und c) in Abhängigkeit des Feststoffgehalts.

Die Viskositäten aller drei Dispersionen steigen bei höheren Feststoffgehalten stark an. Der Anstieg tritt bei den erfindungsgemäßen Dispersionen b) und c) im Vergleich zu Dispersion a) jedoch erst bei deutlich höheren Feststoffgehalten ein. Das Integral der Viskosität für Dispersion b) und c) ist im Integrationsbereich 0,4-5% mit 1052 mPas×% bzw. 402 mPas×% deutlich kleiner als das entsprechende Integral für Dispersion a), welches 2635 mPas×% beträgt.

**Beispiel 3:**

3.1. Herstellung von oxidierten Elektrodenkörpern:

Tantalpulver mit einer spezifischen Kapazität von 150 000 µFV/g wurde unter Einschluss eines Tantaldrahtes zu Pellets gepresst und gesintert, um einen mit den Abmessungen 2,2 mm × 1,1 mm × 1,1 mm zu bilden. Die porösen Elektrodenkörper wurden zur Bildung eines Dielektrikums in einem Phosphorsäureelektrolyten auf 12 V anodisiert.

3.2 Herstellung des Feststoffelektrolyten

Die oxidierten Elektrodenkörper wurden in der Dispersion b) 1 min getränkt. Danach erfolgte eine Trocknung bei 120°C für 10 min. Tränkung und Trocknung wurden 19 weitere Male durchgeführt.

## 3.3 Herstellung einer polymeren Außenschicht

Dispersion d):

In einem 5 l-Glasreaktor mit Rührer und Thermometer wurden 2,5 l demineralisiertes Wasser vorgelegt. Unter Rühren wurden 214,2 g p-Toluolsufonsäure-monohydrat und 2,25 g Eisen(III)sulfat-heptahydrat eingetragen. Nachdem sich alles gelöst hatte, wurden 85,8 g 3,4-Ethylendioxythiophen zugegeben und 30 Minuten gerührt. Anschließend wurden 192,9 g Natriumperoxodisulfat unter Rühren eingetragen und die Mischung weitere 24 Stunden bei Raumtemperatur gerührt. Nach Reaktionsende wurde das entstandene PEDT/Toluolsulfonat-Pulver auf einer Porzellannutsche abfiltriert, mit 3 l demineralisiertem Wasser gewaschen und zuletzt 6 Stunden bei 100°C getrocknet. Man erhielt 89 g eines blauschwarzen PEDT-Toluolsufonat-Pulvers.

In einem 5 l Glasreaktor mit Rührer und Thermometer wurden 1736 g entionisiertes Wasser, 660 g einer wässrigen Polystyrolsulfonsäurelösung mit einem mittleren Molekulargewicht $M_w$ von 70000 und einem Feststoffgehalt von 3,8 Gew.-% vorgelegt. Die Reaktionstemperatur wurde zwischen 20 und 25°C gehalten. Unter Rühren wurden 10,2 g 3,4-Ethylendioxythiophen zugegeben. Die Lösung wurde 30 Minuten (min) gerührt. Anschließend wurden 0,06 g Eisen(III)-sulfat und 19 g Natriumpersulfat zugegeben und die Lösung weitere 24 Stunden (h) gerührt. Nach Abschluss der Reaktion wurden zur Entfernung anorganischer Salze 200 ml eines stark sauren Kationenaustauschers (Lewatit S100, Lanxess AG) und 500 ml eines schwach basischen Anionenaustauschers (Lewatit MP 62, Lanxess AG) zugegeben und die Lösung weitere 2 h gerührt. Der Ionenauschtauscher wurde abfiltriert. In einem Becherglas mit Rührer wurden 180 g dieser PEDT/PSS-Dispersion , 10 g eines Sulfopolyesters (Eastek 1100, Feststoffgehalt 30%, Eastman), 8 g Dimethylsulfoxid, 1 g 3-Glycidoxypropyltrimethoxysilan (Silquest A-187, OSi Specialties) und 0,4 g Netzmittel (Dynol 604, Air Products) eine Stunde intensiv gemischt. Anschließend wurden 2 g des PEDT/Toluolsulfonat-Pulvers mittels einer Perlmühle-Dissolver-Einheit eindispergiert. Dazu wurden 300 g Zirkonoxidperlen ($\varnothing$ 1 mm) zugegeben und die Mischung 1 Stunde unter Kühlung mit Wasser bei 7000U/min gerührt. Zuletzt wurden die Mahlperlen über ein 0,8 $\mu$m Sieb abgetrennt. Diese erhaltene Dispersion d) wies einen Feststoffgehalt von 4,7 % und eine Viskosität von 200 mPas auf. Die spezifische Leitfähigkeit betrug 90 S/cm.

Die Kondensatorkörper wurden in der Dispersion d) getränkt und anschließend 10 min bei 120°C getrocknet.

Abschließend wurden die Elektrodenkörper mit einer Graphit und Silberschicht überzogen.

Die mittleren elektrischen Werte der auf die vorangehende Weise gefertigten 10 Kondensatoren befinden sich in Tabelle 4. Die Kapazität (in Mikrofarad) wurde bei 120 Hz und der äquivalente Serienwiderstand (ESR) (in Milliohm) bei 100 kHz mittels eines LCR Meters (Agilent 4284A) bestimmt.

### Beispiel 4:

10 Kondensatoren wurden analog zu Beispiel 3 gefertigt, jedoch wurde zur Herstellung des Feststoffelektrolyten anstelle der Dispersion b) die Dispersion c) aus Beispiel 2 verwendet.

Die mittleren elektrischen Werte der Kondensatoren befinden sich in Tabelle 4.

### Vergleichsbeispiel 2:

10 Kondensatoren wurden analog zu Beispiel 3 gefertigt, jedoch wurde zur Herstellung des Feststoffelektrolyten anstelle der Dispersion b) die Dispersion a) aus Vergleichsbeispiel 1 verwendet.

Die mittleren elektrischen Werte der Kondensatoren befinden sich in Tabelle 4.

Tabelle 4

|  | Kapazität [$\mu$F] | Verlustfaktor [%] | ESR [m$\Omega$] | Reststrom [$\mu$A] |
|---|---|---|---|---|
| Beispiel 3 (Dispersion b) | 49 | 8.5 | 137 | 4 |
| Beispiel 4 (Dispersion c) | 91 | 5.1 | 134 | 4 |
| Vergleichsbeispiel 1 (Dispersion a) | 17.5 | 9.6 | 145 | 7 |

Obwohl die Dispersionen a), b) und c) beim Aufbringen auf den oxidierten Elektrodenkörper ähnliche Viskositäten aufweisen, lassen sich mit den erfindungsgemäßen Dispersionen b) und c) vielfach höhere Kapazitätswerte als mit der nicht erfindungsgemäßen Dispersion a) erreichen.

### Beispiel 5:

5.1. Herstellung von oxidierten Elektrodenkörpern:

10 poröse Aluminiumfolien der Größe 4 mm $\times$ 4mm wurden bei 20 V anodisiert.

5.2 Herstellung des Feststoffelektrolyten

100g der Dispersion b) (aus Beispiel 1) und 0,5 g 3-Glycidoxypropyltrimethoxysilan (Silquest A-187, OSi Specialties) wurden in einem Becherglas mit Rührer intensiv gemischt. Anschließend wurde der pH-Wert dieser Dispersion durch Zugabe von 2-Dimethylaminoethanol auf eine Wert von 6 eingestellt.
Die oxidierten Aluminiumfolien wurden in dieser Dispersion 1 min getränkt. Danach erfolgte eine Trocknung bei 120°C für 10 min. Tränkung und Trocknung wurden neun weitere Male durchgeführt.

5.3 Herstellung einer polymeren Außenschicht

Die Kondensatorkörper wurden in der Dispersion d) aus Beispiel 3 getränkt und anschließend 10 min bei 120°C getrocknet.
Abschließend wurden die Elektrodenkörper mit einer Graphit und Silberschicht überzogen.
Die mittleren elektrischen Werte der auf die vorangehende Weise gefertigten 10 Kondensatoren befinden sich in Tabelle 5.Die Kapazität (in Mikrofarad) wurde bei 120 Hz und der äquivalente Serienwiderstand (ESR) (in Milliohm) bei 100 kHz mittels eines LCR Meters (Agilent 4284A) bestimmt.

### Beispiel 6:

10 Kondensatoren wurden wie in Beispiel 5 gefertigt, jedoch unter Verwendung der Dispersion c) aus Beispiel 2.
Die mittleren elektrischen Werte der auf die vorangehende Weise gefertigten neun Kondensatoren befinden sich in Tabelle 5.

### Vergleichsbeispiel 3:

10 Kondensatoren wurden wie in Beispiel 5 gefertigt, jedoch unter Verwendung der Dispersion a) aus dem Vergleichsbeispiel 1.
Die mittleren elektrischen Werte der auf die vorangehende Weise gefertigten neun Kondensatoren befinden sich in Tabelle 5.

Tabelle 5

|  | Kapazität [$\mu$F] | ESR [m$\Omega$] |
|---|---|---|
| Beispiel 5 (Dispersion b) | 13 | 20 |
| Beispiel 6 (Dispersion c) | 15 | 19 |
| Vergleichsbeispiel 3 (Dispersion a) | 6 | 23 |

Die Kondensatoren aus den Beispielen 5 und 6 weisen eine deutlich höhere Kapazität als die Kondensatoren des Vergleichsbeispiels 3 auf.

### Beispiel 7:

7.1. Herstellung von oxidierten Elektrodenkörpern:

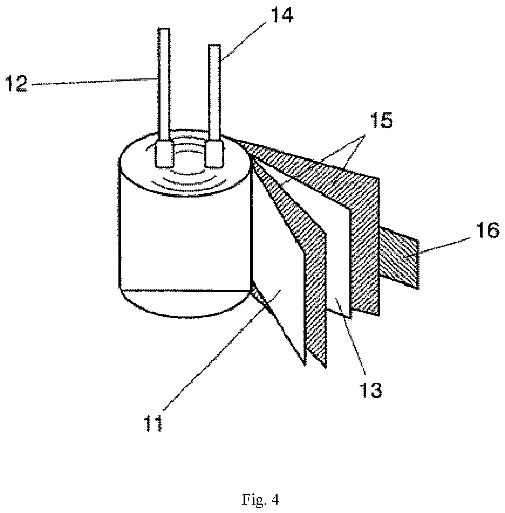

Eine poröse, auf 92 V formierte Aluminiumfolie mit den Abmessungen 0.1mm$\times$130 mm$\times$3mm (Anodenfolie) und eine poröse Aluminiumfolie mit den Abmessungen 0.03 mm$\times$145 mm$\times$3mm (Kathodenfolie) werden jeweils mit einem Kontaktdraht versehen, anschließend zusammen mit zwei Cellulose-Separatorpapieren wie in Fig. 4 dargestellt aufgewickelt und mit einem Klebeband fixiert. 10 dieser oxidierten Elektrodenkörper wurden hergestellt. Das Separatorpapier der oxidierten Elektrodenkörper wurden anschließend in einem Ofen bei 300°C carbonisiert.

7.2 Herstellung des Feststoffelektrolyten

100g der Dispersion b) (aus Beispiel 1) und 0,1 g Netzmittel (Dynol 604, Air Products) wurden in einem Becherglas mit Rührer intensiv gemischt. Anschließend wurde der pH-Wert dieser Dispersion durch Zugabe von 2-Dimethylaminoethanol auf eine Wert von 6 eingestellt.

Die oxidierten Elektrodenkörper wurden in dieser Dispersion 15 min getränkt. Danach erfolgte eine Trocknung bei 150°C für 40 min. Tränkung und Trocknung wurden zwei weitere Male durchgeführt.

Die mittleren elektrischen Werte der auf die vorangehende Weise gefertigten 10 Kondensatoren befinden sich in Tabelle 6.Die Kapazität (in Mikrofarad) wurde bei 120 Hz und der äquivalente Serienwiderstand (ESR) (in Milliohm) bei 100 kHz mittels eines LCR Meters (Agilent 4284A) bestimmt.

**Beispiel 8:**

10 Kondensatoren wurden wie in Beispiel 7 gefertigt, jedoch unter Verwendung der Dispersion c) aus Beispiel 2.

Die mittleren elektrischen Werte der auf die vorangehende Weise gefertigten 10 Kondensatoren befinden sich in Tabelle 6.

**Vergleichsbeispiel 4:**

10 Kondensatoren wurden wie in Beispiel 6 gefertigt, jedoch unter Verwendung der Dispersion a) aus dem Vergleichsbeispiel 1.

Die mittleren elektrischen Werte der auf die vorangehende Weise gefertigten 10 Kondensatoren befinden sich in Tabelle 6.

Tabelle 6

| | Kapazität [$\mu$F] | ESR [m$\Omega$] |
|---|---|---|
| Beispiel 7 (Dispersion b) | 36 | 290 |
| Beispiel 8 (Dispersion c) | 40 | 280 |
| Vergleichsbeispiel 4 (Dispersion a) | 13 | 763 |

Die Kondensatoren aus den Beispielen 7 und 8 weisen eine deutlich höhere Kapazität und einen niedrigeren ESR als die Kondensatoren des Vergleichsbeispiels 4 auf.

**Patentansprüche**

**1.** Dispersion (A) enthaltend wenigstens Teilchen (B) enthaltend ein elektrisch leitfähiges Polythiophen, das gegebenenfalls substituiert ist, und ein Dispersionsmittel (D), wobei die Dispersion als Dispersionsmittel (D) Wasser enthält, wobei das Polythiophen ein kationisches Polythiophen ist, wobei die Teilchen (B) zusätzlich wenigstens ein Polyanion enthalten wobei das kationische Polythiophen in Form eines Polythiophen/Polyanion-Komplexes vorliegt, wobei das Polythiophen Poly(3,4-ethylendioxythiophen) ist und wobei das Polyanion an Anion der Polystyrolsulfonsäure ist, **dadurch gekennzeichnet, dass** für die Dispersion (A) das gemäß der hierin beschriebenen Testmethode bestimmte Integral der Viskosität, welche dargestellt ist als Funktion des Feststoffgehalts, im Integrationsbereich von 0,4% Feststoff bis 5% Feststoff kleiner als 2500 mPas$\times$% ist, wobei die Viskosität mit einem Rheometer in mPas bei 20°C und einer Scherrate von 100 s$^{-1}$ und der Feststoffgehalt in Prozent bestimmt wird, dass die Teilchen enthaltend ein Polythiophen im trockenen Zustand eine spezifische elektrische Leitfähigkeit größer als 100 S/cm besitzen und dass die Teilchen (B) des leitfähigen Polymers in der Dispersion (A) einen mittleren Durchmesser von 1-100 nm haben.

**2.** Dispersion (A) nach Anspruch 1, **dadurch gekennzeichnet, dass** das Integral der Viskosität kleiner als 2000 mPas$\times$% ist.

**3.** Dispersion (A) nach Anspruch 2, **dadurch gekennzeichnet, dass** das Integral der Viskosität kleiner als 1500 mPas$\times$% ist.

4. Dispersion (A) gemäß wenigstens einem der Ansprüche 1 bis 3, **dadurch gekennzeichnet, dass** die Teilchen (B) der Dispersion im trockenen Zustand eine spezifische elektrische Leitfähigkeit größer als 100 S/cm besitzen.

5. Dispersion (A) gemäß wenigstens einem der Ansprüche 1 bis 4, **dadurch gekennzeichnet, dass** die Dispersion (A) einen Gehalt an Metallen kleiner 5000 mg/kg besitzt.

6. Dispersion (A) gemäß wenigstens einem der Ansprüche 1 bis 5, **dadurch gekennzeichnet, dass** die Dispersion (A) zusätzlich Vernetzer und/oder oberflächenaktive Substanzen und/oder weitere Additive enthält.

7. Dispersion (A) gemäß Anspruch 6, **dadurch gekennzeichnet, dass** die Dispersion (A) Additive enthält, die die Leitfähigkeit steigern.

8. Dispersion (A) gemäß Anspruch 7, **dadurch gekennzeichnet, dass** die Additive ausgewählt sind aus der Gruppe bestehend aus ethergruppenhaltigen Verbindungen, lactongruppenhaltigen Verbindungen, amid- oder lactamgruppenhaltigen Verbindungen, Sulfonen, Sulfoxiden, Zuckern, Zuckerderivaten, Zuckeralkoholen, Imiden, Furanderivaten, Dialkoholen und Polyalkoholen.

9. Dispersion (A) gemäß Anspruch 8, **dadurch gekennzeichnet, dass** die Additive ausgewählt sind aus der Gruppe bestehend aus Tetrahydofuran; γ-Butyrolacton, γ-Valerolacton, Caprolactam, N-Methylcaprolactam, N,N-Dimethylacetamid, N-Methylacetamid, N,N-Dimethylformamid (DMF), N-Methylformamid, N-Methylformanilid, N-Methylpyrrolidon (NMP), N-Octylpyrrolidon, Pyrrolidon, Sulfolan (Tetramethylensulfon), Dimethylsulfoxid (DMSO), Saccharose, Glucose, Fructose, Lactose, Sorbit, Mannit, Succinimid, Maleimid, 2-Furancarbonsäure, 3-Furancarbonsäure, Ethylenglycol, Glycerin, Diethylenglykol und Triethylenglycol.

**Claims**

1. A dispersion (A) containing at least particles (B) containing an electrically conductive polythiophene, which is optionally substituted, and a dispersant (D), the dispersion containing water as the dispersant (D), the polythiophene being a cationic polythiophene, the particles (B) additionally containing at least one polyanion, the cationic polythiophene being present in the form of a polythiophene/polyanion complex, the polythiophene being poly(3,4-ethylenedioxythiophene) and the polyanion being an anion of polystyrene sulfonic acid, **characterized in that,** for the dispersion (A), the integral of the viscosity, which is represented as a function of the solids content, determined according to the test method described herein is less than 2500 mPas×% in the integration range of 0.4% solids to 5% solids, the viscosity being determined with a rheometer in mPas at 20°C and a shear rate of 100 s$^{-1}$ and the solids content being determined in percent, **in that** the particles containing a polythiophene in the dry state have a specific electrical conductivity greater than 100 S/cm, and **in that** the particles (B) of the conductive polymer in the dispersion (A) have an average diameter of 1-100 nm.

2. The dispersion (A) according to claim 1, **characterized in that** the integral of the viscosity is less than 2000 mPas×%.

3. The dispersion (A) according to claim 2, **characterized in that** the integral of the viscosity is less than 1500 mPas×%.

4. The dispersion (A) according to at least one of claims 1 to 3, **characterized in that** the particles (B) of the dispersion in the dry state have a specific electrical conductivity greater than 100 S/cm.

5. The dispersion (A) according to at least one of claims 1 to 4, **characterized in that** the dispersion (A) has a content of metals of less than 5000 mg/kg.

6. The dispersion (A) according to at least one of claims 1 to 5, **characterized in that** the dispersion (A) additionally contains crosslinkers and/or surface-active substances and/or further additives.

7. The dispersion (A) according to claim 6, **characterized in that** the dispersion (A) contains additives which increase the conductivity.

8. The dispersion (A) according to claim 7, **characterized in that** the additives are selected from the group consisting of ether-group-containing compounds, lactone-group-containing compounds, amide- or lactam-group-containing compounds, sulfones, sulfoxides, sugars, sugar derivatives, sugar alcohols, imides, furan derivatives, dialcohols and polyalcohols.

9. The dispersion (A) according to claim 8, **characterized in that** the additives are selected from the group consisting of tetrahydofuran; γ-butyrolactone, γ-valerolactone, caprolactam, N-methylcaprolactam, N,N-dimethylacetamide, N-methylacetamide, N,N-dimethylformamide (DMF), N-methylformamide, N-methylformanilide, N-methylpyrrolidone (NMP), N-octylpyrrolidone, pyrrolidone, sulfolane (tetramethylene sulfone), dimethyl sulfoxide (DMSO), sucrose, glucose, fructose, lactose, sorbitol, mannitol, succinimide, maleimide, 2-furandicarboxylic acid, 3-furandicarboxylic acid, ethylene glycol, glycerol, diethylene glycol and triethylene glycol.

**Revendications**

1. Dispersion (A) contenant au moins des particules (B) contenant un polythiophène électriquement conducteur, lequel est éventuellement substitué, et un agent de dispersion (D), dans laquelle la dispersion contient de l'eau en tant qu'agent de dispersion (D), dans laquelle le polythiophène est un polythiophène cationique, dans laquelle les particules (B) contiennent en outre au moins un polyanion, dans laquelle le polythiophène cationique est présent sous la forme d'un complexe polythiophène/polyanion, dans laquelle le polythiophène est le poly(3,4-éthylènedioxythiophène) et dans laquelle le polyanion est un anion de l'acide polystyrène sulfonique, **caractérisée en ce que,** pour la dispersion (A), l'intégrale de la viscosité, déterminée selon la méthode d'essai décrite ici, qui est représentée en fonction de la teneur en matières solides, est inférieure à 2 500 mPas× % dans la plage d'intégration de 0,4 % de matières solides à 5 % de matières solides, dans laquelle la viscosité est déterminée avec un rhéomètre en mPas à 20 °C et un taux de cisaillement de 100 s⁻¹ et la teneur en matières solides est déterminée en pourcentage, **en ce que** les particules contenant un polythiophène possèdent à l'état sec une conductivité électrique spécifique supérieure à 100 S/cm **et en ce que** les particules (B) du polymère conducteur dans la dispersion (A) présentent un diamètre moyen de 1 à 100 nm.

2. Dispersion (A) selon la revendication 1, **caractérisée en ce que** l'intégrale de la viscosité est inférieure à 2 000 mPas× %.

3. Dispersion (A) selon la revendication 2, **caractérisée en ce que** l'intégrale de la viscosité est inférieure à 1 500 mPas× %.

4. Dispersion (A) selon au moins l'une des revendications 1 à 3, **caractérisée en ce que** les particules (B) de la dispersion possèdent à l'état sec une conductivité électrique spécifique supérieure à 100 S/cm.

5. Dispersion (A) selon au moins l'une des revendications 1 à 4, **caractérisée en ce que** la dispersion (A) possède une teneur en métaux inférieure à 5 000 mg/kg.

6. Dispersion (A) selon au moins l'une des revendications 1 à 5, **caractérisée en ce que** la dispersion (A) contient en outre des agents de réticulation et/ou des substances tensioactives et/ou d'autres additifs.

7. Dispersion (A) selon la revendication 6, **caractérisée en ce que** la dispersion (A) contient des additifs qui augmentent la conductivité.

8. Dispersion (A) selon la revendication 7, **caractérisée en ce que** les additifs sont choisis dans le groupe constitué de composés contenant des groupes éther, de composés contenant des groupes lactone, de composés contenant des groupes amide ou lactame, de sulfones, de sulfoxydes, de sucres, de dérivés de sucre, d'alcools de sucre, d'imides, de dérivés de furane, de dialcools et de polyalcools.

9. Dispersion (A) selon la revendication 8, **caractérisée en ce que** les additifs sont choisis dans le groupe constitué de tétrahydofurane ; γ-butyrolactone, γ-valérolactone, caprolactame, N-méthylcaprolactame, N,N-diméthylacétamide, N-méthylacétamide, N,N-diméthylformamide (DMF), N-méthylformamide, N-méthylformanilide, N-méthylpyrrolidone (NMP), N-octylpyrrolidone, pyrrolidone, sulfolane (tétraméthylène sulfone), diméthylsulfoxyde (DMSO), saccharose, glucose, fructose, lactose, sorbitol, mannitol, succinimide, maléimide, acide 2-furane carboxylique, acide 3-furane carboxylique, éthylène glycol, glycérol, diéthylène glycol et triéthylène glycol.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 340512 A
- DE 102005010162 A1
- DE 102004003784 A1
- WO 2007052852 A1
- JP 2007297637 A
- EP 1746613 A1
- WO 2007031206 A1
- EP 440957 A
- DE 19627071 A
- EP 1524678 A

**In der Beschreibung aufgeführte Nicht-Patentliteratur**

- *Colloid Polym. Sci.,* 1989, vol. 267, 1113-1116